# EUROPÄISCHE PATENTSCHRIFT

(11) **EP 1 036 680 B1**
(45) Veröffentlichungstag und Bekanntmachung des Hinweises auf die Patenterteilung: **15.11.2006**
(21) Anmeldenummer: 00105688.6
(22) Anmeldetag: 17.03.2000
(51) Int. Cl.: B60G 21/05, B60G 7/00

(54) **Verbundlenkerachse für Kraftfahrzeuge**
Twist-beam axle for a motor vehicle
Essieu à traverse déformable en torsion pour un véhicule automobile

(30) Priorität: 17.03.1999 DE 19911845
(43) Veröffentlichungstag der Anmeldung: 20.09.2000
(73) Patentinhaber: BENTELER AG, D-33104 Paderborn (DE)
(72) Erfinder: Ewerszumrode, Andreas, Dr., 33100 Paderborn (DE)
(74) Vertreter: Ksoll, Peter

(56) Entgegenhaltungen:
- EP-A- 0 774 369
- DE-A- 19 542 523
- DE-C- 19 604 286
- US-A- 4 637 628

## Beschreibung

Die Erfindung betrifft eine Verbundlenkerachse für Kraftfahrzeuge.

Im Automobilbau besteht zur Steigerung der Produktivität ein generelles Bestreben nach einer möglichst wirtschaftlichen und rationellen Herstellung der Kraftfahrzeugkomponenten. Diesen Forderungen unterliegen auch Verbundlenkerachsen, welche die Vorteile eines einfachen Aufbaus bei geringem Raumgewicht und guten kinematischen Eigenschaften vereinen. Eine solche Verbundlenkerachse umfasst im wesentlichen zwei Längslenker, welche durch einen Querträger verbunden sind, der als Torsionsstab wirkt. Zum verbinden der Längslenker mit dem Querträger sind verschiedene Fügeverfahren bekannt, wobei eine schweißtechnische Festlegung die gebräuchlichste ist.

Üblicherweise werden die Verbundlenkerachsen aus Stahlhalbzeugen gefertigt. Im Zuge einer angestrebten Leichtbauweise hat sich aber auch Aluminium bereits als eine gegenüber Stahl spezifisch leichtere Alternative bewährt.

Aus der DE 44 16 725 A1 geht beispielsweise eine Verbundlenkerachse hervor, welche zwei durch eine einstückige Querstrebe aus Stahl verbundene Längslenker aus Aluminium oder einer Aluminiumlegierung umfasst, wobei die Längslenker durch Warmumformung hergestellt sind. Die Enden der Querstrebe werden in eine angepasste Ausnehmung der Längslenker eingefügt und anschließend verschweißt. Nachteilig an dieser Ausführung ist der Fertigungsaufwand und die damit verbundenen Mehrkosten. Darüber hinaus stellt die Schweißverbindung naturgemäß eine geometrische und metallurgische Kerbe dar, die sich ungünstig auf das Festigkeitsverhalten auswirken kann.

Durch die DE 196 04 286 C1 zählt es ferner zum Stand der Technik, die Längslenker und die Enden der Querstrebe schrumpftechnisch zu verbinden. Diese Technologie ist vielversprechend. Allerdings können aus der Wärmebelastung bei der Herstellung nachteilige Fügeeigenspannungen resultieren.

Durch die gattungsgemäße DE 195 42 523 A1 ist es bekannt, die Enden der Querstrebe einer Verbundlenkerhinterachse mit dem Längslenkern durch Kleben zu verbinden. Hierzu ist die Querstrebe jeweils an ihren Enden mit einem Rohrteil aus Stahlwerkstoff verschweißt, welches in den jeweiligen Längslenker eingeklebt ist. Dazu ist das Rohrteil im zum Einkleben vorgesehenen Bereich hohlzylindrisch ausgebildet. Der Durchmesser und die Wandstärke des Rohrteils im Bereich der Schweißstelle ist durch gleichmäßige Verformung an den Durchmesser und die Wandstärke der Querstrebe in diesem Bereich angepasst. Auch diese Herstellungsweise ist durch die schweißtechnische Verbindung der Rohrteile an den Enden der Querstrebe fertigungstechnisch aufwendig. Auch hierbei ergibt sich das Problem, dass die Schweißverbindung hinsichtlich ihres Festigkeitsverhaltens eine potentielle Schwachstelle darstellt.

Der Erfindung liegt daher ausgehend vom Stand der Technik die Aufgabe zugrunde, eine Verbundlenkerachse für Kraftfahrzeuge fertigungstechnisch weiterzubilden, wobei insbesondere Eigenspannungen im Bereich der Übergänge vom Querträger zu den Längslenkern reduziert werden.

Die Lösung dieser Aufgabe besteht in den im Anspruch 1 aufgeführten Merkmalen.

Vorteilhafte Ausgestaltungen und Weiterbildungen des erfindungsgemäßen Grundgedankens bilden Gegenstand der abhängigen Ansprüche.

Kernpunkt der Erfindung bildet die Maßnahme, die Längslenker direkt mit dem Querträger klebetechnisch zu verbinden, wozu zwischen den Enden und den Aufnahmen ein klebstoffbefüllbarer Ringspalt ausgebildet ist. Dies ermöglicht eine rationelle Fertigung bei einer qualitativ hochwertigen Verbindung von Längslenker und Querträger, welche die geforderten hohen Sicherheitsstandards erfüllt. Die Verbindung ist dynamisch hoch belastbar. Die im Betrieb von den Längslenkern aufgenommenen Torsions- und Biegekräfte werden zuverlässig in den Querträger übergeleitet und von diesem kompensiert.

Damit insbesondere beim Einsatz von Klebstoffen höherer Viskosität der Klebstoff beim Fügen der Verbindung nicht aus der Fügezone verdrängt wird, ist vorgesehen, dass zwischen den Enden und den Aufnahmen ein klebstoffbefüllbarer Ringspalt ausgebildet ist. In den Ringspalt wird vor oder nach dem Zusammenfügen der Bauteile Klebstoff eingebracht. Eine nachträgliche Befüllung kann über eine oder mehrere Öffnungen bzw. Bohrungen in den Bauteilen erfolgen, die einen äußeren Anschluss ermöglichen.

Der Ringspalt kann durch eine geeignete Formgebung der Aufnahmen bzw. der Enden erfolgen. Dies kann beispielsweise durch einen gießtechnischen, einen spanenden oder einen umformtechnischen Prozess erfolgen.

Aus technologischer und wirtschaftlicher Sicht verspricht das Einkleben der Enden des Querträgers in Aufnahmen im Längslenker viele Vorteile. Einer der beachtenswertesten Vorteile ist der vergleichsweise günstige Eigenspannungszustand der gefügten Verbindungen. Während in der Verbindungszone bisheriger Verbundlenkerachsen mit geschweißten oder mittels reinem Presssitz erzeugten Verbindungen auch ohne äußere Belastungen teilweise hohe Spannungen, insbesondere Fügeeigenspannungen, auftraten, weist die erfindungsgemäß geklebte Verbindung von Querträger und Längslenker geringe Fügeeigenspannungen auf.

Die Aufnahmen können als stutzenförmige Ansätze, Ausbauchungen oder Zapfen am Längslenker ausgebildet sein, in bzw. auf die die Enden der Querträger gesteckt sind. Bei rohrförmigen, mittels hydraulischem Innenhochdruck geformten Längslenkern sind die Aufnahmen vorzugsweise hydroformtechnisch an den Längslenkern ausgebildet. Selbstverständlich können die Aufnahmen am Längslenker auch nach innen eingezogen sein.

Die Geometrie der Enden und der Aufnahme bestimmen den Kraftfluss zwischen den Fügeteilen. Hinsichtlich ihres Querschnitts können die Enden des Querträgers und die Aufnahmen eine den Kraft-/Formschluss zwischen den Bauteilen erhöhende Gestaltung aufweisen. Denkbar ist sowohl eine rotationssymmetrische Ausbildung der Enden und der Aufnahmen als auch eine jeweils gegengleich ineinanderfügbare Querschnittskonfiguration mit Erhebungen, Abflachungen oder Aussparungen. Auf diese Weise können höchste Tragfähigkeiten realisiert werden.

Neben der ausschließlich geklebten Verbindung von Querträger und Längslenkern weist eine vorteilhafte Ausführungsform einer erfindungsgemäßen Verbundlenkerachse gemäß Anspruch 2 eine kombiniert geklebt/gepresste Längslenker-Querträger-Verbindung auf. Hierbei sind die Enden des Querträgers zusätzlich mit Presssitz in die Aufnahmen der Längslenker gefügt.

Bei einer Ausführungsform der kombiniert geklebt/gepressten Verbindung ist bei Raumtemperatur der Außendurchmesser der Enden des Querträgers geringfügig größer als der Innendurchmesser der Aufnahmen. Zum Fügen können die Aufnahmen erwärmt werden. Nach dem Erkalten tritt dann eine klebgeschrumpfte Verbindung oder Querpressklebverbindung ein. Alternativ kann das Übermaß zwischen den Fügeteilen durch Einpressen der Enden in die Aufnahmen überwunden werden. Es entsteht dann eine Längspressklebverbindung.

Eine Alternative ist durch die Merkmale im Anspruch 3 charakterisiert. Die Verbindung der Enden in den Aufnahmen wird als Spielpassung dimensioniert. Der Klebstoff wird auf eine oder beide Fügeflächen aufgetragen und die Bauteile ineinander gefügt. Anschließend wird das Spiel der nunmehr mit Klebstoff gefüllten Passung durch einen Umformvorgang minimiert. Idealerweise hat der Umformvorgang das Auftreten einer Druckspannung in der Fügezone zur Folge. Dies kann z.B. dadurch erreicht werden, dass die Form der zu fügenden Bauteile oder deren Werkstoff so gewählt sind, dass die elastische Verformung der Aufnahme größer ist, als die aufgenommenen Enden eines Querträgers. Bei Einleitung des Umformvorgangs verformen sich die Aufnahmen dann plastisch, während sich die Enden des Querträgers lediglich elastisch verformen. Nach Beendigung des Umformvorgangs federn die Enden zurück. Es bleibt eine Druckspannung in der Fügezone zurück, welche sich beschleunigend auf den Abbindevorgang des Klebstoffs auswirkt und die Festigkeit der Verbindung verbessert.

Ein weiterer wesentlicher Vorteil der erfindungsgemäßen Verbundlenkerachse ist, dass sich aus unterschiedlichen Werkstoffen bestehende Längslenker und Querträger wärmearm oder sogar wärmefrei fügen lassen. Für die Praxis besonders vorteilhaft wird eine Verbundlenkerachse gemäß Anspruch 4 angesehen, deren Querträger aus Stahl besteht, wohingegen die Längslenker aus Leichtmetall, vorzugsweise aus Aluminium bzw. einer Aluminiumlegierung oder Magnesium bzw. einer Magnesiumlegierung, gefertigt sind.

Diese Mischbauweise einer Verbundlenkerachse ermöglicht ein hohes Maß an Gewichtseinsparung unter Gewährleistung eines sehr guten elastokinetischen Verhaltens der Verbundlenkerachse.

Als Klebstoff werden neben anderen bevorzugt Epoxidharzklebstoffe verwendet. Der Klebstoff kann entweder durch eine chemische Reaktion bei Zweikomponentenklebstoffen oder durch einen physikalischen Vorgang, wie das Verdunsten des Lösungsmittels, abbinden.

Die Bindung an den Fügeflächen zwischen Längslenkern und den Enden des Querträgers beruht vorwiegend auf der Adhäsion zwischen Klebstoff und Metall sowie der Kohäsionskräfte innerhalb des Klebstoffs.

Gemäß den Merkmalen des Anspruchs 5 kommt ein anaerob aushärtender Klebstoff zum Einsatz. Die zuverlässige Abbindung und damit Verklebung erfolgt bei diesem Klebstoff auch ohne Verdunsten eines Lösungsmittels. Der Klebstoff gewährleistet eine gute gleichmäßige Benetzbarkeit der Klebeflächen und geringe innere Spannungen nach dem Abbinden. Die Neigung zum Schrumpfen beim Abbinden ist gering.

Ein ebenfalls für die Praxis gut geeigneter Klebstoff ist nach den Merkmalen des Anspruchs 6 ein Reaktionsklebstoff. Ein Polyadditionsklebstoff beispielsweise härtet ohne Freiwerden von Spaltprodukten durch eine Additionsreaktion aus. Der Klebstoff ist ohne Druck kalt und warm aushärtbar und weist gegenüber den anaeroben Klebstoffsystemen eine höhere Viskosität auf. Der Einsatz eines solchen Klebstoffs bietet sich daher insbesondere wegen der herstellungsbedingten Bauteiltoleranzen von Längslenker und Querträger an.

Möglich ist ferner der Einsatz von physikalisch aushärtenden Klebstoffen (Anspruch 7), wie Schmelzklebstoffe.

Eine weitere Steigerung des elastokinetischen Verhaltens einer Verbundlenkerachse wird nach den Merkmalen des Anspruchs 8 durch einen Querträger erreicht, der in seinem Mittelabschnitt einen im wesentlichen V- oder U-förmigen Querschnitt aufweist. Dieser Querschnitt geht zu den Enden hin kontinuierlich auf einen kreisrunden oder ovalen rohrförmigen Querschnitt über.

Die erfindungsgemäß vorgesehene klebetechnische Verbindung der Längslenker mit dem Querträger ist dynamisch hoch belastbar. Die belastungsgerechte Anbindung des Querprofils ermöglicht eine Überleitung der Torsions- und Biegekräfte von Längslenkern in den Querträger. Der Querträger kompensiert als Torsionsstab die eingeleiteten Kräfte. Die erfindungsgemäße Verbundlenkerachse ist fertigungstechnisch rationell herzustellen und besitzt ein gutes statisches und dynamisches Lastverhalten. Ferner ist eine gewichtsoptimierte Ausführung möglich. Hierzu trägt die Einsparung von Schweißnähten, Schrauben oder Nieten bei. Ferner können durch die Klebeverbindung sehr gut Längslenker und Querträger aus verschiedenartigen metallischen Werkstoffen kombiniert werden. Besonders gut geeignet ist die Kombination von Längsträgern aus Leichtmetall auf Aluminium- und/oder Magnesiumbasis mit Querträgern aus Stahl.

Die Erfindung ist nachfolgend anhand von in den Zeichnungen dargestellten Ausführungsbeispielen näher beschrieben. Es zeigen:
- Figur 1: in technisch generalisierten Darstellungsweise eine erfindungsgemäße Verbundlenkerachse;
- Figur 2: den Ausschnitt II der Figur 1 im Horizontalschnitt;
- Figur 3: eine Seitenansicht auf die Darstellung der Figur 2 gemäß dem Pfeil III;
- Figur 4: im Querschnitt einen Ausschnitt aus dem Ende eines Querträgers und einen Ausschnitt aus einem Längslenker vor dem Verbinden der Bauteile;
- Figur 5: die Darstellung gemäß Figur 4 nach dem Fügen der Bauteile;
- Figur 6: ebenfalls im Querschnitt jeweils einen Ausschnitt aus dem Ende eines Querträgers und eines Längsträgers vor dem Fügevorgang;
- Figur 7: die Darstellung gemäß Figur 6 nach dem Fügevorgang;
- Figur 8: im Querschnitt jeweils einen Ausschnitt aus Querträger und Längsträger einer weiteren Ausführungsform vor dem Verbinden der Bauteile;
- Figur 9: die Darstellung gemäß Figur 8 nach dem Fügevorgang;
- Figur 10: einen Horizontalschnitt durch die Darstellung der Figur 9 gemäß der Linie X₋X mit der Verdeutlichung eines Umformvorgangs und
- Figuren 11 bis 13: im Querschnitt schematisch dargestellt drei weitere Ausführungsformen.

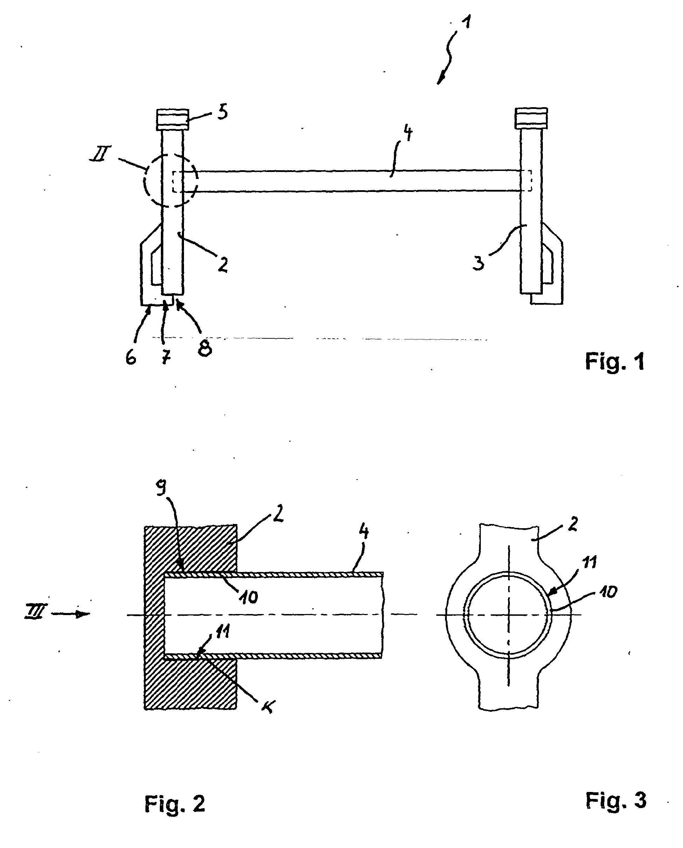

Die Darstellungen in den Figuren 1 bis 13 sind technisch vereinfacht und nicht maßstäblich zu verstehen. In allen Darstellungen tragen einander entsprechende Bauteile die gleichen Bezugszeichen.

In der Figur 1 ist eine Verbundlenkerachse 1 für frontgetriebene Kraftfahrzeuge schematisch dargestellt. Die Verbundlenkerachse 1 umfasst zwei Längslenker 2, 3 aus Aluminiumguss, die durch einen einteiligen Querträger 4 verbunden sind. Der Querträger 4 wirkt als Torsionsprofil und ist aus Festigkeits- und Steifigkeitsgründen aus höchstfestem Stahl. Meist weist der Querträger 4 in seinem mittleren Bereich ein im wesentlichen V- oder U-förmiges Profil auf, welches endseitig in einen annähernd kreisförmigen oder ovalen Querschnitt übergeht.

In den Längslenkern 2, 3 sind bauteilgerecht Buchsen 5 sowie Radlager 6, Stoßdämpferaufnahme 7 und gegebenenfalls Federsitze 8 integriert.

In den Figuren 2 und 3 ist der Ausschnitt II der Figur 1 im Horizontalschnitt und in der Seitenansicht dargestellt.

Jeder Längslenker 2 besitzt eine Aufnahme 9, welche ein Ende 10 des Querträgers 4 aufnimmt. Die Aufnahmen 9 sind in ihrer Querschnittskonfiguration auf die der Enden 10 des Querträgers 4 abgestimmt. Die Fügung von Längslenker 2 und Querträger 4 ist durch eine Klebeverbindung 11 hergestellt. Hierzu sind die Klebe- bzw. Fügeflächen mit Klebstoff K benetzt und das Ende 10 in die Aufnahme 9 eingepasst worden. Hierbei kommt ein Klebstoff K hoher Festigkeit und Alterungsbeständigkeit mit im anwendungstechnisch relevanten Temperaturbereich zuverlässiger Wärmebeständigkeit zum Einsatz.

Durch die Adhäsion zwischen Klebstoff K und Metall wird ein kombinierter Kraft-/Formschluss mit hoher Binde- und Tragfähigkeit zwischen Längslenker 2 bzw. 3 und Querträger 4 erreicht. Die erfindungsgemäße Verbundlenkerachse 1 zeichnet sich durch den schweißnahtlosen Übergang vom Querträger 4 auf die Längslenker 2, 3 aus. Eigenspannungen im Übergangsbereich sind minimiert. Vorteilhaft können auch Längslenker 2, 3 und Querträger 4 aus unterschiedlichen Werkstoffen wärmearm gefügt werden.

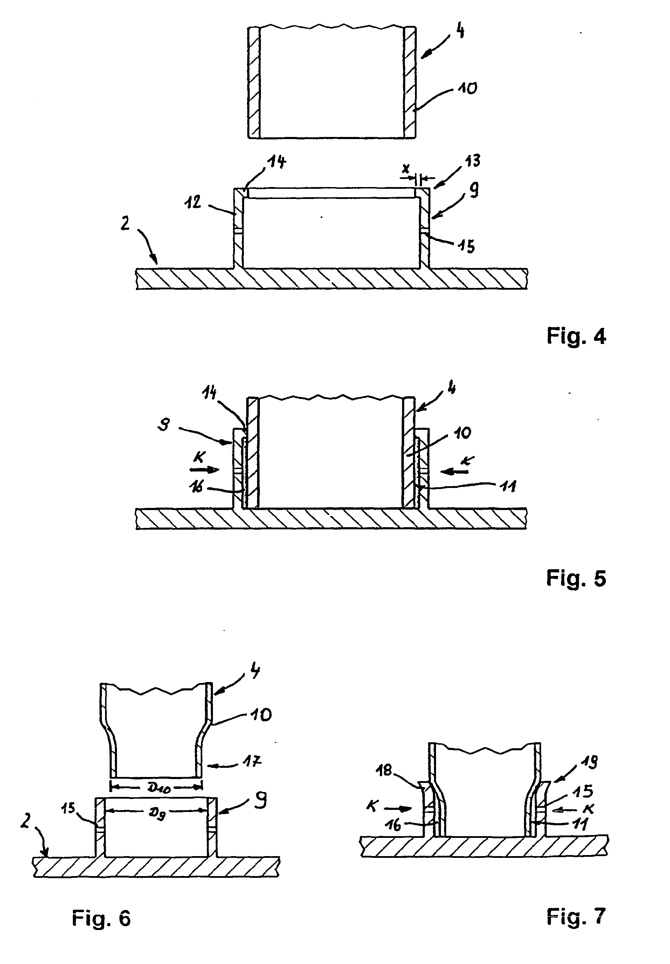

Die Figuren 4 und 5 zeigen einen Ausschnitt einer Verbundlenkerachse 1 mit einer Klebeverbindung 11 zwischen dem Ende 10 eines Querträgers 4 und dem Längslenker 2.

Die Aufnahme 9 ist als stutzenförmiger Ansatz 12 am Längslenker 2 ausgebildet. Der Ansatz 12 weist an seinem freien Ende 13 einen umlaufenden, nach innen gerichteten Ringkragen 14 auf. Im Ansatz 12 sind Bohrungen 15 vorgesehen zur Einleitung von Klebstoff K.

Nachdem das Ende 10 in die Aufnahme 9 eingesetzt ist, wird in den dazwischen liegenden Ringspalt 16 über die Bohrungen 15 Klebstoff K eingebracht. Die Breite des Ringspalts 16 ist hierbei durch die Breite X des Ringkragens 14 bestimmt. Vorzugsweise kommt ein lösungsmittelfreier reaktionsfähiger Klebstoff K zum Einsatz. Eine Wärmezufuhr kann beschleunigend zur Abbindung genutzt werden. Ferner kann hierdurch die Festigkeit verbessert werden. Nach dem Abbinden des Klebstoffs K ist eine zuverlässige Klebeverbindung 11 von Längslenker 2 und Querträger 4 hergestellt.

Die Figuren 6 und 7 zeigen eine Ausführungsform einer Verbundlenkerachse, bei der das Ende 10 des Querträgers 4 unter plastischer Verformung der Aufnahme 9 in diese eingesetzt ist. Der Außendurchmesser D₁₀ vom Querträger 4 ist im endseitigen Bereich 17 entsprechend auf den Innendurchmesser D₉ der Aufnahme 9 abgestimmt, so dass er in die Aufnahme 9 unter Ausbildung eines Ringspalts 16 eingefügt werden kann. Die geometrischen Abmessungen sind so gewählt, dass das Ende 10 des Querträgers 4 beim Einfügen in die Aufnahme 9 die Wandung 18 am freien Ende 19 plastisch nach außen verformt und abschließt.

Über die Bohrungen 15 wird der zwischen dem Ende 10 und der Aufnahme 9 ausgebildete Ringspalt mit Klebstoff K befüllt. Nach dem Aushärten tritt eine zuverlässige Verbindung von Querträger 4 und Längsträger 2 ein mit hoher Steifigkeit der Klebeverbindung 11.

Grundsätzlich ist die zuvor beschriebene Ausführungsform auch dazu geeignet, den Klebstoff K auf die Fügeflächen aufzutragen und das Ende 10 mit Presssitz in die Aufnahme 9 unter plastischer Verformung des freien Endes 19 einzusetzen. Bohrungen in der Wandung der Aufnahme sind dann nicht erforderlich.

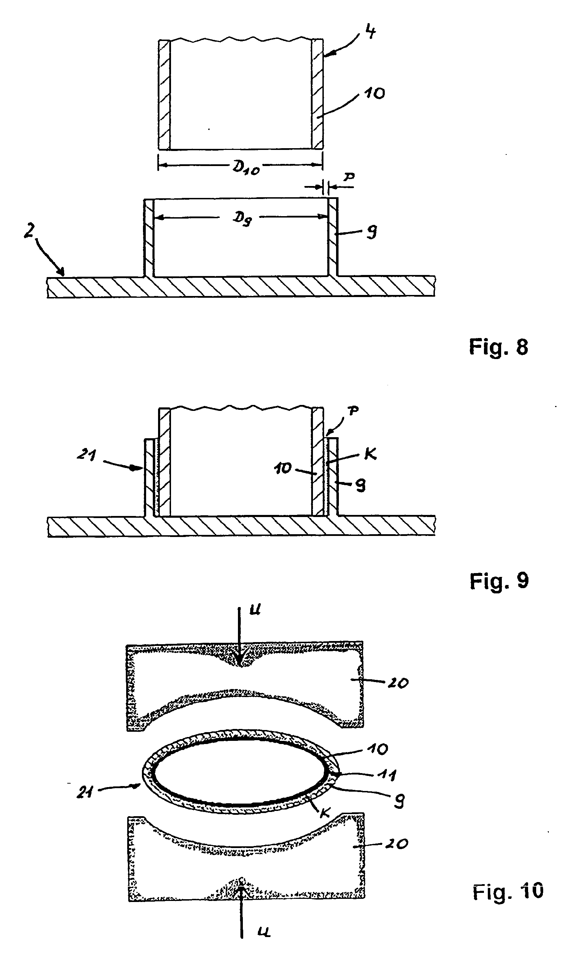

In den Figuren 8 bis 10 ist eine Alternative dargestellt, bei der das Ende 10 des Querträgers 4 mit Spielpassung P dimensioniert ist. Demzufolge ist der Außendurchmesser D₁₀ geringfügig kleiner als der Innendurchmesser D₉ der Aufnahme 9. Klebstoff K wird auf eine oder beide Fügeflächen aufgetragen, wonach das Ende 10 in die Aufnahme 9 eingesetzt wird. Anschließend wird das Spiel der nunmehr mit Klebstoff K gefüllten Passung P durch einen Umformvorgang minimiert.

Der Umformvorgang ist anhand der Figur 10 verdeutlicht. Auf die Außenkontur von Aufnahme 9 und Ende 10 angepasste Pressenhälften 20 wirken auf den Verbindungsbereich 21 ein. Der Pressendruck ist durch die Pfeile U verdeutlicht. Hierbei wird das Spiel zwischen Ende 10 und Aufnahme 9 minimiert. Dies geschieht unter plastischer Verformung der Aufnahme 9, wohingegen das Ende 10 elastisch verformt wird und nach Entlastung rückfedert. Hierdurch kann eine Druckspannung aufgebaut werden, die sich vorteilhaft auf die Fügezone bzw. die Klebeverbindung 11 der Bauteile 9, 10 auswirkt. Es kommt so zu einer kombiniert geklebt/gepressten Klebeverbindung 11.

Bei der Herstellung der fügetechnischen Verbindung 11 kann das Zusammenwirken eines unterschiedlichen plastischen und elastischen Verformungsvermögens von Aufnahme 9 bzw. Ende 10 ausgenutzt werden. In diesem Zusammenhang ist es von Vorteil, wenn der Längslenker 2 bzw. die Aufnahme 9 und der Querträger 4 bzw. die Enden 10 aus Werkstoffen bestehen mit voneinander verschiedenen Rückfedereigenschaften, wie dies bei der Kombination von Längslenkern 2, 3 auf Aluminium- oder Magnesiumbasis und Querträgern 4 auf Stahlbasis der Fall ist.

Die Krafteinleitung erfolgt dann über den Bauteil 9 bzw. 10 mit dem geringeren elastischen Verformungsvermögen. Aufgrund der stärkeren Rückfederung des anderen Bauteils bleibt nach dem Fügen eine Presspassung zurück.

Bei der Werkstoffkombination Aluminium/Stahl beispielsweise weist Stahl die geringere Elastizität auf. Die Anordnung ist dann so gestaltet, dass sich eine Aufnahme 9 unter dem Einfluss einer äußeren Kraft plastisch verformt, während das Ende 10 elastisch verformt wird. Bei der Werkstoffkombination Aluminium/Stahl wird daher die äußere Kraft über das Bauteil aus Stahl eingeleitet. Aufgrund der stärkeren Rückfederung des Aluminiumbauteils bleibt nach dem Fügen eine Presspassung zurück. Diese wirkt sich sowohl beschleunigend auf den Abbindevorgang als auch festigkeitssteigernd auf die Verbindung 11 aus.

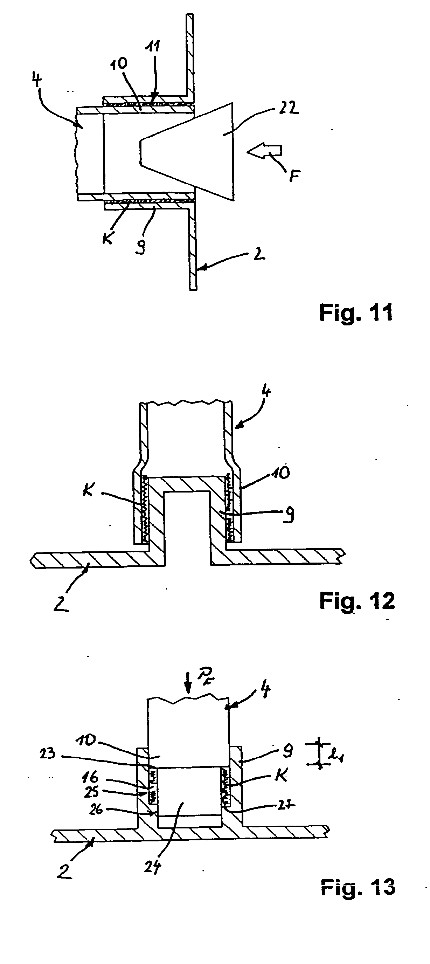

Die Krafteinleitung bei einem Umformvorgang kann auch von innen über das Ende 10 eines Querträgers 4 erfolgen, wie dies in der Figur 11 schematisch dargestellt ist. Hier wird das Ende 10 von innen durch ein Werkzeug 22 unter Kraftverteilung F in der Aufnahme 9 eines Längslenkers 2 aus Aluminium aufgeweitet. Hierbei kommt es zu einer Umformung im mit Klebstoff K benetzten Verbindungsbereich und es stellt sich eine kombiniert geklebt/gepresste Klebeverbindung 11 ein.

Eine weitere Alternative ist in der Figur 12 dargestellt, bei der das Ende 10 eines Querträgers 4 auf eine zapfenförmige Aufnahme 9 eines Längslenkers 2 unter Einbringung von Klebstoff K gesteckt ist. Zusätzlich kann das Ende 10 unter äußerer Krafteinwirkung plastisch und die Aufnahme 9 elastisch verformt werden. Auch hier kommt es bei einer Werkstoffkombination Aluminium/Stahl zu einer Presspassung nach dem Fügen.

Schließlich ist in der Figur 13 eine Ausführungsform dargestellt, bei der wiederum ein mit Klebstoff K befüllter Ringspalt 16 zwischen Aufnahme 9 und Ende 10 ausgebildet ist. Hierzu sind die Aufnahme 9 und das Ende 10 abgestuft. Das Ende 10 geht über einen Absatz 23 in einen im Durchmesser reduzierten Zapfen 24 über. Die Aufnahme 9 weist einen oberen Abschnitt 25 und einen unteren Abschnitt 26 auf, wobei der untere Abschnitt 26 über eine Stufe 27 gegenüber dem Durchmesser des oberen Abschnitts 25 reduziert ist. Der Zapfen 24 passt sich geometrisch abgestimmt und dichtend in den unteren Abschnitt 26 ein. Das Ende 10 ist mit seinem Längenabschnitt l₁ im oberen Abschnitt 25 geführt. Zwischen dem oberen Abschnitt 25 und dem Zapfen 24 bildet sich so der klebstoffbefüllte Ringspalt 16 aus. Durch Aufbringen einer Fügekraft P_{F} in axialer Richtung des Querträgers 4 baut sich in der Fügezone im Klebstoff K eine Druckspannung auf. Vorzugsweise wird die Fügekraft P_{F} während des Aushärtens des Klebstoffs K aufrechterhalten.

### Bezugszeichenaufstellung

- 1 -: Verbundlenkerachse
- 2 -: Längslenker
- 3 -: Längslenker
- 4 -: Querträger
- 5 -: Buchse
- 6 -: Radlager
- 7 -: Stoßdämpferaufnahme
- 8 -: Federsitz
- 9 -: Aufnahme
- 10 -: Ende v. 4
- 11 -: Klebeverbindung
- 12 -: Ansatz
- 13 -: freies Ende v. 12
- 14 -: Ringkragen
- 15 -: Bohrungen
- 16 -: Ringspalt
- 17 -: endseitiger Bereich v. 2
- 18 -: Wandung v. 9
- 19 -: freies Ende v. 9
- 20 -: Pressenhälfte
- 21 -: Verbindungsbereich
- 22 -: Werkzeug
- 23 -: Absatz
- 24 -: Zapfen
- 25 -: oberer Abschnitt v. 9
- 26 -: unterer Abschnitt v. 9
- 27 -: Stufe

- K -: Klebstoff
- D₉ -: Innendurchmesser v. 9
- D₁₀ -: Außendurchmesser v. 10
- X -: Breite v. 14
- P -: Passung zw. 9 u. 10
- U -: Pressendruck
- F -: Kraft
- P_{F} -: Fügekraft
- l₁ -: Längenabschnitt v. 10

## Patentansprüche

1. Verbundlenkerachse für Kraftfahrzeuge, welche zwei durch einen Querträger (4) verbundene Längslenker (2, 3) umfasst, wobei jeder Längslenker (2, 3) eine an die Querschnittskonfiguration der Enden (10) des Querträgers (4) angepasste Aufnahme (9) aufweist, in der die Enden (10) des Querträgers (4) klebetechnisch gefügt sind, **dadurch gekennzeichnet, dass** zwischen den Enden (10) und den Aufnahmen (9) ein klebstoffbefüllbarer Ringspalt (16) ausgebildet ist.

2. Verbundlenkerachse nach Anspruch 1, **dadurch gekennzeichnet, dass** die Enden (10) mit Presssitz in den Aufnahmen (9) gefügt sind.

3. Verbundlenkerachse nach Anspruch 1 oder 2, **dadurch gekennzeichnet, dass** die Enden (10) unter plastischer Verformung der Aufnahmen (9) in diese eingefügt sind.

4. Verbundlenkerachse nach einem der Ansprüche 1 bis 3, **dadurch gekennzeichnet, dass** der Querträger (4) aus Stahl und die Längslenker (2, 3) aus Aluminium oder einer Aluminiumlegierung bestehen.

5. verbundlenkerachse nach einem der Ansprüche 1 bis 4, **dadurch gekennzeichnet, dass** die Klebeverbindung (11) durch einen anaerob aushärtenden Klebstoff hergestellt ist.

6. Verbundlenkerachse nach einem der Ansprüche 1 bis 4, **dadurch gekennzeichnet, dass** die Klebeverbindung (11) durch einen Reaktionsklebstoff hergestellt ist.

7. Verbundlenkerachse nach einem der Ansprüch 1 bis 4, **dadurch gekennzeichnet, dass** die Klebeverbindung (11) durch einen physikalisch aushärtenden Klebstoff hergestellt ist.

8. Verbundlenkerachse nach einem der Ansprüche 1 bis 7, **dadurch gekennzeichnet, dass** der Querträger (4) ein im wesentlichen V- oder U-förmiges Profil mit im Querschnitt mindestens annähernd kreisförmig oder oval ausgebildeten Enden (10) besitzt.

## Claims

1. Twist-beam axle for motor vehicles, which comprises two longitudinal control arms (2, 3) connected by a crossmember (4), each longitudinal control arm (2, 3) having a receptacle (9) which is matched to the cross-sectional configuration of the ends (10) of the crossmember (4) and in which the ends (10) of the crossmember (4) are fitted with adhesive bonding, **characterized in that** an adhesive-fillable annular gap (16) is formed between the ends (10) and the receptacles (9).

2. Twist-beam axle according to Claim 1, **characterized in that** the ends (10) are fitted in the receptacles (9) with a press fit.

3. Twist-beam axle according to Claim 1 or 2, **characterized in that** the ends (10) are fitted into the receptacles (9) with plastic deformation of the latter.

4. Twist-beam axle according to one of Claims 1 to 3, **characterized in that** the crossmember (4) is composed of steel and the longitudinal control arms (2, 3) are composed of aluminium or an aluminium alloy.

5. Twist-beam axle according to one of Claims 1 to 4, **characterized in that** the adhesive bonding connection (11) is produced by an anaerobically curing adhesive.

6. Twist-beam axle according to one of Claims 1 to 4, **characterized in that** the adhesive bonding connection (11) is produced by a reaction adhesive.

7. Twist-beam axle according to one of Claims 1 to 4, **characterized in that** the adhesive bonding connection (11) is produced by a physically curing adhesive.

8. Twist-beam axle according to one of Claims 1 to 7, **characterized in that** the crossmember (4) has an essentially V- or U-shaped profile with ends (10) which are of at least approximately circular or oval design in cross section.

## Revendications

1. Essieu à bras combiné pour véhicules automobiles, qui comprend deux bras allongés (2, 3) reliés par une traverse (4), chaque bras allongé (2, 3) présentant un logement (9) adapté à la configuration de section transversale des extrémités (10) de la traverse (4), logements dans lequel les extrémités (10) de la traverse (14) sont assemblées par des techniques de collage, **caractérisé en ce qu'**une fente annulaire (16) susceptible d'être remplie de colle est ménagée entre les extrémités (10) et les logements (9).

2. Essieu à bras combiné selon la revendication 1, **caractérisé en ce que** les extrémités (10) sont assemblées dans les logements (9) par montage à la presse.

3. Essieu à bras combiné selon la revendication 1 ou 2, **caractérisé en ce que** les extrémités (10) sont engagées dans les logements (9) sous déformation plastique de ceux-ci.

4. Essieu à bras combiné selon l'une des revendications 1 à 3, **caractérisé en ce que** la traverse est en acier et les bras allongés (2, 3) sont en aluminium ou en alliage d'aluminium.

5. Essieu à bras combiné selon l'une des revendications 1 à 4, **caractérisé en ce que** la liaison collée (11) est établie par une colle à durcissement anaérobique.

6. Essieu à bras combiné selon l'une des revendications 1 à 4, **caractérisé en ce que** la liaison collée (11) est établie par une colle à réaction.

7. Essieu à bras combiné selon l'une des revendications 1 à 4, **caractérisé en ce que** la liaison collée (11) est établie par une colle à durcissement physique.

8. Essieu à bras combiné selon l'une des revendications 1 à 7, **caractérisé en ce que** la traverse (4) possède un profil essentiellement en forme de V ou de U, avec des extrémités (10) réalisées avec une section transversale au moins approximativement circulaire ou ovale.
